(19) Europäisches Patentamt
European Patent Office
Office européen des brevets

(11) **EP 1 098 470 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
***H04L 9/06*** *(2006.01)*

(21) Anmeldenummer: **99121762.1**

(22) Anmeldetag: **03.11.1999**

(54) **Blockverschlüsselungsverfahren zur Datenverschlüsselung mittels Feistel-Netzwerken**

Block encryption method for data encryption using Feistel networks

Procédé de chiffrage par blocs pour le chiffrage de données utilisant des réseaux de Feistel

(84) Benannte Vertragsstaaten:
**DE**

(43) Veröffentlichungstag der Anmeldung:
**09.05.2001 Patentblatt 2001/19**

(73) Patentinhaber: **Infineon Technologies AG**
**85579 Neubiberg (DE)**

(72) Erfinder:
• **Soehne, Peter, Dr.**
**85244 Röhrmoos (DE)**
• **Hess, Erwin, Dr.**
**85521 Ottobrunn (DE)**
• **Zaig, Dietmar**
**83607 Holzkirchen (DE)**
• **Meyer, Bernd, Dr.**
**81737 München (DE)**

(74) Vertreter: **Zimmermann, Tankred Klaus**
**Schoppe, Zimmermann, Stöckeler & Zinkler**
**Patentanwälte**
**Postfach 246**
**82043 Pullach bei München (DE)**

(56) Entgegenhaltungen:
**EP-A- 0 801 477**

• **BELLARE M ET AL: "On the construction of variable-input-length ciphers" FAST SOFTWARE ENCRYPTION. 6TH INTERNATIONAL WORKSHOP, FSE'99. PROCEEDINGS, FAST SOFTWARE ENCRYPTION. 6TH INTERNATIONAL WORKSHOP, FSE'99, ROME, ITALY, 24-26 MARCH 1999, Seiten 231-244, XP000892788 1999, Berlin, Germany, Springer-Verlag, Germany ISBN: 3-540-66226-X**
• **SCHNEIER B ET AL: "Unbalanced Feistel networks and block cipher design" FAST SOFTWARE ENCRYPTION. THIRD INTERNATIONAL WORKSHOP PROCEEDINGS, FAST SOFTWARE ENCRYPTION, CAMBRIDGE, UK, 21-23 FEB. 1996, Seiten 121-144, XP000892786 1996, Berlin, Germany, Springer-Verlag, Germany ISBN: 3-540-60865-6**

**Beschreibung**

Die vorliegende Erfindung betrifft ein Blockverschlüsselungsverfahren zur Datenverschlüsselung mittels Feistel-Netzwerken.

Es handelt sich dabei um eine blockbasierte Datenverschlüsselung, wie sie zum Beispiel in Sicherheitscontrollern angewendet wird. Eine solche Verschlüsselung erfolgt normalerweise mit einer festen Blockgröße, d.h. das Blockverschlüsselungsverfahren basiert auf einer festen Blocklänge.

Dieser Stand der Technik hat den Nachteil, daß auf einer bestimmten Hardware lediglich Datenblöcke einer bestimmten Größe verarbeitet werden können.

Ein solches Blockverschlüsselungsverfahren unter Verwendung eines Feistel-Netzwerks ist z.B. in der EP 0 801 477 A1 beschrieben.

BELLARE M ET AL: "On the construction of variable-input-length ciphers" FAST SOFTWARE ENCRYPTION. 6TH INTERNATIONAL WORKSHOP, FSE'99. PROCEEDINGS, FAST SOFTWARE ENCRYPTION. 6TH INTERNATIONAL WORKSHOP, FSE'99, ROME, ITALY, 24-26 MARCH 1999, Seiten 231-244, XPO00892788 1999, Berlin, Germany, Springer-Verlag, Germany ISBN: 3-540-66226-X, beschreiben einen Ansatz zur Erzeugung von Verschlüsselungen mit variabler Eingangslänge.

Es ist die Aufgabe der vorliegenden Erfindung, ein Verfahren zur Datenverschlüsselung für Eingangsdaten mit variabler Größe anzugeben.

Diese Aufgabe wird durch ein Verfahren nach Anspruch 1 gelöst.

Erfindungsgemäß wird ein Blockverschlüsselungsverfahren geschaffen, bei dem Datenblöcke verschiedener Größe auf der gleichen Hardware verschlüsselt werden können.

Die Eingangsdaten werden nicht symmetrisch auf die Funktionsblöcke der Feistel-Netzwerke verteilt, sondern asymmetrisch in Abhängigkeit von der Anzahl der Eingangsdaten.

Es ist dabei besonders bevorzugt, daß in jeder Feistel-Runde eine Umordnung der Eingangsdaten erfolgt.

Ein besonders schnelles und einfaches Verfahren wird dadurch geschaffen, daß die Auswahl der Eingangsdaten maskengesteuert erfolgt.

Besonders bevorzugt ist es dabei, daß die Maskierung durch logische UND-Verknüpfung mit einem Konfigurationsregister erfolgt, welches genau die erforderliche Anzahl Einsen enthält.

Erfindungsgemäß kann also eine variable Blocklänge in Feistel-Netzwerken mit konstanter Blocklänge verarbeitet werden, wobei gleichzeitig die zugehörige Hardware vereinfacht und optimiert werden kann, so daß mit dieser gleichen Hardware unterschiedliche Blocklängen verarbeitet werden können.

Die Erfindung wird im folgenden anhand eines Ausführungsbeispiels näher erläutert, welches in anliegenden Zeichnungen dargestellt ist. Es zeigen:

Figur 1 den grundsätzlichen Aufbau einer Feistel-Runde mit vier Stufen;

Figur 2 den grundsätzlichen Ablauf der erfindungsgemäßen Feistel-Chiffrierung; und

Figur 3 ein erfindungsgemäßes Ausführungsbeispiel einer maskenbasierten Realisierung des erfindungsgemäßen Verfahrens.

Die vorliegende Erfindung kann auf alle blockbasierten Verschlüsselungsverfahren angewendet werden, die auf dem Feistel-Prinzip beruhen. Dieses ist beispielsweise in B. Schneier: "Applied Cryptography", Verlag John Wiley & Sons, 1996 dargestellt.

Die theoretischen Grundlagen asymmetrischer Feistel-Netzwerke ergeben sich aus der Literaturstelle: "B. Schneier, J. Kelsey: "Unbalanced Feistel networks and block cipher design" in "Proceedings of the third International Workshop on Fast Software Encyryption", Springer-Verlag, Berlin, 1996, Seiten 121 bis 144.

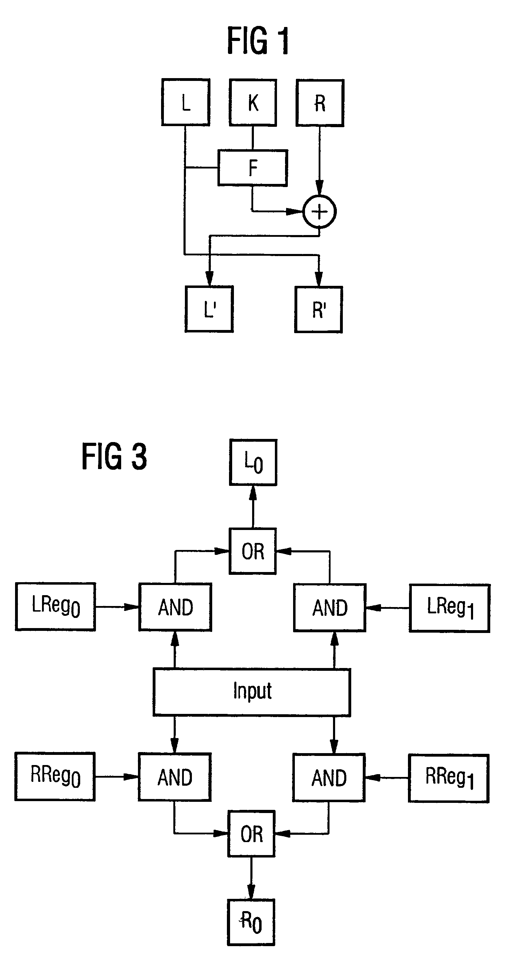

Im folgenden soll anhand der Figur 1 das Grundprinzip der Feistel-Netzwerke dargestellt werden.

Ein Feistel-Netzwerk ist ein Verfahren, um einen Datenblock mittels Funktionen (die im folgenden F-Funktionen genannt werden sollen) zu verschlüsseln. Die F-Funktionen bilden einen Datenblock (z.B. dargestellt durch ein $n$-Bit Signal) auf einen Block der gleichen Länge ab, wobei diese (nichtlineare) Abbildung zusätzlich durch einen Schlüssel K gesteuert wird.

Das Netzwerk besteht im allgemein aus mehreren Runden. Der grundsätzliche Ablauf einer Runde ist in Fig. 1 dargestellt. Die Eingangsdaten werden in zwei Hälften aufgeteilt (L bzw. R). Der linke Block L wird mittels der Funktionen F und dem zugehörigen Schlüssel K transformiert, und dieses Ergebnis mit der dazugehörigen rechten Hälfte R verknüpft. Der Ergebnisblock wird (nach evtl. Transformationen) als linker Block in die nächste Runde geführt. Gleichzeitig geht die linke Hälfte als rechter Block in die nächste Runde ein.

Ausgehend davon soll im folgenden der mathematische Hintergrund für die erfindungsgemäße Verschlüsselung von Blöcken variabler Größe dargestellt werden:

Vorgegeben sei eine Feistel-Chiffre mit Blockgröße $2l$ und $2N$ Runden. (Die Beschränkung auf symmetrische Feistel-Chiffren und eine gerade Rundenanzahl ist nicht notwendig und geschieht hier nur aus technischen Gründen). Gezeigt wird ein allgemeines Verfahren, wie aus dieser Chiffre für jedes $2 \leq n \leq 2l$ eine Verschlüsselungsabbildung:

$$F_n : M_n \, x \, \kappa \rightarrow M_n$$

abgeleitet werden kann, wobei $M_n = (0, ..., 2^n-1)$ die Menge aller mit n Bit darstellbaren Zahlen, und $K$ den Schlüsselraum der Feistel-Chiffre darstellt. Kern der Aussage ist, daß $F_n$ ($.,K$) für jedes feste K eine Bijektion von $M_n$ auf $M_n$ darstellt.

Definitionsgemäß wird die Feistel-Chiffre festgelegt durch
eine Zuordnungsvorschrift $K \rightarrow (K_1, ..., K_{2N})$, mittels der aus dem Schlüssel die in den einzelnen Runden benötigten Teilschlüssel gebildet werden.
Rundenfunktionen $f_1, ... f_{2N} : M_1 \, x \, K_K \rightarrow M_1$, wobei $K_K$ die Menge der möglichen Rundenschlüssel bezeichnet.
Die Feistel-Operation besteht dann (mit Ausnahme einer evtl. Vorverarbeitung des Klartextblocks wie z.B. der Initialpermutation im DES, und einer evtl. ähnlich einfachen Nachbearbeitung des Ciphertextblocks) aus folgenden Schritten:

- Aufteilung des Klartext-Inputs in zwei $l$-Bit Blöcke $L_0$ und $R_0$

- Aufeinanderfolgende Berechnung von

$$L_{j+1} := R_j \oplus f_{j+1} (L_j, K_{j+1}), \quad R_{j+1} := L_j, j = 0, ... 2N-1$$

- Zusammenfassung von $(L_{2N}, R_{2N})$ zum Ciphertext

Um für $2 \leq n \leq 2l$ eine Funktion $F_n : M_n \, xK \rightarrow M_n$ wie oben gefordert ableiten zu können, benötigt man

- eine Aufteilung n = r+s in Zahlen $1 \leq r, s \leq l$

- eine lineare Abbildung ('linear' heißt hier stets 'linear über GF(2)'. Das Prinzip gilt jedoch mit geringfügigen Variationen auch für einfache nichtlineare Funktionen (z.B. affine Funktionen)):

$$\Phi = (\Phi_1, \Phi_2) : M_n \rightarrow M_r \, x \, M_s$$

mit

$$rg \, \Phi_1 = \dim(\Phi_1(M_n)) = r$$

$$rg \, \Phi_2 = \dim(\Phi_2(M_n)) = s$$

- Lineare Abbildungen $\rho, \sigma : M_l \rightarrow M_l$ mit

$$rg(\rho) = \dim(\rho(M_r)) = r$$

$$Kern\ (\rho) \cap \Phi_1(M_n) = \{0\}$$

$$rg(\sigma) = dim\ (\sigma(M_I)) = s$$

$$Kern\ (\sigma) \cap \Phi_2(M_n) = \{0\}$$

Diese Bedingungen sind erfüllbar, weil dim $(\Phi_1(M_n))=r$ ist (z.B. triviale Wahl von $\rho$ als Identität auf $\Phi_1(M_n)$, durch 0 auf "Orthogonalraum fortgesetzt"). Sie führen dazu, daß $(\rho \cdot \Phi_1, \sigma \cdot \Phi_2)$ eine Bijektion von $M_n \rightarrow \rho(M_I) \times \sigma(X_I)$ darstellt.

- Eine lineare bijektive Abbildung $\psi : M_n \rightarrow \rho(M_I) \times \sigma(M_I)$. Eine solche Abbildung existiert wegen dim $(M_n)=n = r + s = \dim\rho(M_I) + \dim(\sigma(M_I))$

Zur Ausführung von $F_n$ sind die folgenden Schritte notwendig:

$$- \ L_0 = \Phi_1(Klartext),\ R_0 = \Phi_2\ (Klartext)$$

$$- \ L_{j+1} := R_j \oplus f_{j+1}((\rho(L_j),K_{j+1}),R_{j+1}:=L_j,\ (j\ gerade) \qquad (*)$$

$$L_{j+1} := R_j \oplus f_{j+1}((\sigma(L_j),K_{j+1}),R_{j+1}:=L_j,\ (j\ ungerade)$$

sukzessive für j=0, ..., 2N-1

- Bestimmung des Ciphertextes als $\psi^{-1}$ $(\rho(L_{2N}),\sigma(R_{2N}))$

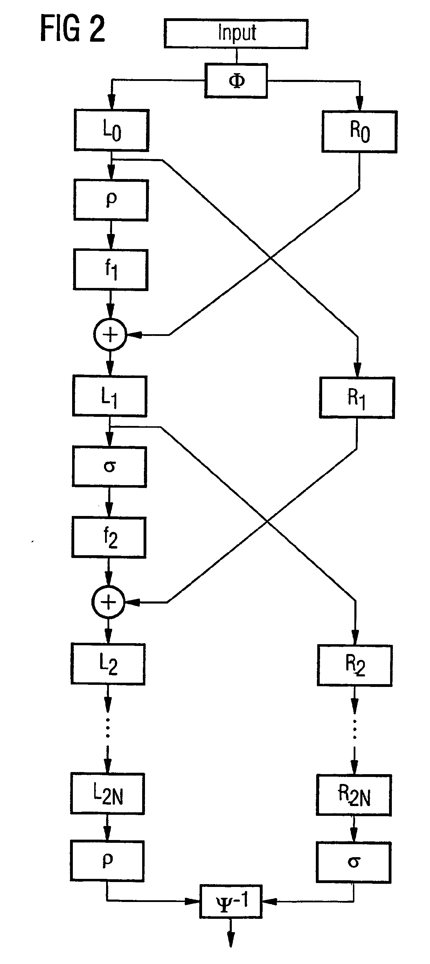

Der Ablauf ist schematisch in Fig. 2 dargestellt.

Offensichtlich stellt das so definierte $F_n$ eine Abbildung von $M_n \rightarrow M_n$ dar. Um die Bijektivität zu beweisen, genügt die explizite Angabe der Umkehrabbildung. Hierzu werden durch Anwendung von $\psi$ auf den Ciphertext die Werte $\rho(L_{2N})$ und $\sigma(R_{2N})$ gewonnen. Aufgrund der mit (*) bezeichneten Beziehung gilt für j=2N-1:

$$R_{2N-1} = L_{2N} \oplus f_{2N}((\sigma(L_{2N-1}),\ K_{2N})$$

$$= L_{2N} \oplus f_{2N}((\sigma(R_{2N}),\ K_{2N})$$

folglich ist

$$\rho(R_{2N-1}) = \rho(L_{2N}) \oplus \rho(f_{2N}((\sigma(R_{2N}),K_{2N}))$$

aus den bekannten Werten $\rho(L_{2N})$ und $\sigma(R_{2N})$ sowie dem Schlüssel berechenbar, ebenso

$$\sigma(L_{2N-1}) = \sigma(R_{2N})$$

Wiederholung dieser Schlußweise zeigt, daß $\rho(L_{2j-1})$ und $\sigma(R_{2j-1})$ mittels $\rho(L_{2j})$, $\sigma(R_{2j})$ und $K_{2j}$, und ferner $\rho(L_{2j})$ und $\sigma(R_{2j})$ mittels $\rho(L_{2j+1})$ ,$\sigma(R_{2j+1})$ und $K_{2i+1}$ berechnet werden kann. Insgesamt kann also aus dem vorhandenen Ciphertext $\rho(L_0)$ und $\sigma(R_0)$ berechnet werden. Weil $\rho\big|_{\Phi_1(M_I)}$ und $\sigma\big|_{\Phi_2(M_I)}$ Bijektionen sind, gibt es genau einen Klartext, der dieses Paar $(L_0, R_0)$ erzeugt, q.e.d.

In praktischen Anwendungen der Erfindung wird man bestrebt sein, die benötigten Abbildungen $\Phi,\rho,\sigma$ und $\psi$ so zu wählen, daß sie mit minimalem Aufwand realisierbar sind. Hauptvorteil der vorliegenden Erfindung besteht darin, daß dies möglich ist, und daß überdies die Umkonfigurierbarkeit, d.h. eine andere Wahl von $n = r+s$ ohne großen Aufwand möglich ist. Beispielsweise können $\Phi_1$, $\Phi_2$ sehr einfach folgendermaßen gewählt werden:

- $\Phi_1$ bildet r der n zu verschlüsselnden Bits auf die Bits des linken Blocks $L_0$ ab

- $\Phi_2$ bildet die übrigen s Bits auf die Bits im Block $R_0$ ab Dies läßt sich z.B. durch die in Fig. 3 dargestellte einfache Schaltung mittels eines $4l$ breiten Konfigurationsregisters erreichen:

In diesem Beispiel wird das niederwertigste Bit von $L_0$ als

$$\texttt{L}_{0,0} = (\mathit{I}_0 \ \& \ \texttt{LReg}_{0,0}) \ \texttt{OR} \ (\mathit{I}_M \ \& \ \texttt{LReg}_{1,0}), \qquad \texttt{m<r}$$

gebildet ($I$ =Input, & ist hier die bitweise UND-Operation), d.h. über die Konfigurationsregister $LReg_0$ und $LReg_1$ sind die Werte $I_0$, $I_m$ oder 0 einstellbar. Analog können die anderen Bits berechnet werden. Dadurch kann für jedes n eine sinnvolle Aufteilung realisiert werden.

Die Abbildungen $\rho$ und $\sigma$ können ebenso einfach gewählt und realisiert werden. Für das obige Beispiel von $\Phi_1$ und $\Phi_2$ gilt z.B., daß von den $l$ Bits von $L_0$ genau r signifikant sind, und der Rest ohnehin mit Nullen vorbelegt ist. Daher liegt es nahe, die Abbildung $\rho$ einfach als Projektion auf diese r Bits auszulegen, was durch einfache Maskierung mit einem Konfigurationsregister 'Reg' geschehen kann (vgl. oben):

$$\rho(L) = L \ \& \ Reg$$

wobei der Konficrurationsvektor genau r Einsen enthält. Analog kann $\sigma$ gewählt werden. Die Abbildung $\psi$ schließlich kann identisch zur Abbildung $\Phi$ gewählt werden.

In realen Anwendungen werden häufig geringfügig kompliziertere Abbildungen gewählt werden, um Zusatzforderungen zu erfüllen. Will man beispielsweise den DES-Algorithmus flexibilisieren, so kann man $\rho$, $\sigma$, $\psi$ und $\Phi$ so an die Initialpermutation und die Expansionsabbildung des DES anpassen, daß einzelne S-Boxen überhaupt nicht angesprochen werden (Stromersparnis), und/oder daß an jedem Eingang einer angesprochenen S-Box nicht nur ein, sondern mehrere signifikante Bits anliegen (kryptographische Sicherheit). Diese Erweiterungen können problemlos durchgeführt werden.

Erfindungsgemäß werden die Eingänge also nicht symmetrisch auf die Funktionsblöcke verteilt, sondern asymmetrisch je nach Anzahl der Eingänge (Blocklänge). Erfindungsgemäß verwendet man also in jeder Feistel-Runde zusätzlich zur Hardware für das Feistel-Netzwerk eine Vorrichtung zur Umordnung der Eingangssignale.

Ein wesentlicher Vorteil der vorliegenden Erfindung ist die Vereinfachung der Hardware, d.h. die Möglichkeit, mit einer einzigen Hardware verschieden lange Daten zu verschlüsseln. Dazu sind erfindungsgemäß keine Multiplexer nötig, da die Auswahl der Signale maskengesteuert erfolgen kann. Ebenso lassen sich dadurch verschiedene Varianten des Verfahrens realisieren.

Eine mögliche wichtige Anwendung der vorliegenden Erfindung ist die Adressverschlüsselung bei variablen Speichergrößen.

**Patentansprüche**

1. Blockverschlüsselungsverfahren zur Datenverschlüsselung, mittels einem Feistel-Netzwerk, bei dem die Eingangsdaten für jede Runde auf zwei Teilblöcke (L, R) gleicher Größe I aufgeteilt werden,

**dadurch gekennzeichnet,**

**dass** die Eingangsdaten eine Größe n haben, die kleiner ist als die durch die zwei Teilblöcke (L, R) festgelegte Blockgröße 2l;

**dass** die Eingangsdaten derart aufgeteilt werden, dass der erste Teilblock (L) einen ersten Teil r der Eingangsdaten und der zweite Teilblock (R) einen zweiten Teil s der Eingangsdaten umfasst, wobei der Rest der Teilblöcke (L, R) mit vorbestimmten Werten belegt ist;

**dass** die in den Teilblöcken (L, R) enthaltenen Daten derart maskengesteuert ausgewählt werden, dass die in den jeweiligen Teilblöcken (L, R) befindlichen Teile r, s der Eingangsdaten den entsprechenden Funktionsblöcken des Feistel-Netzwerks bereitgestellt werden; und

**dass** die Eingangsdaten in Abhängigkeit von der Größe der Eingangsdaten asymmetrisch auf die Teilblöcke verteilt werden.

2. Verfahren nach Anspruch 1 oder 2, **dadurch gekennzeichnet, dass** die vorbestimmten Werte der Teilblöcke (L, R) Nullen sind, und dass die Maskierung durch logische UND-Verknüpfung mit einem Konfigurations-Register ($LReg_0$, $LReg_1$, $RReg_0$, $RREG_1$) erfolgt, welches genau die erforderliche Anzahl Einsen enthält.

## Claims

1. A block encryption method for data encryption, by means of a Feistel network, wherein the input data for every round are partitioned into two subblocks (L, R) of the same size I,
   **characterized in that**
   the input data have a size n smaller than the block size 2l determined by the two subblocks (L, R);
   the input data are partitioned such that the first subblock (L) comprises a first part r of the input data and the second subblock (R) comprises a second part s of the input data, wherein the rest of the subblocks (L, R) is occupied with predetermined values;
   the data included in the subblocks (L, R) are selected in a mask-driven manner such that the parts r, s of the input data included in the respective subblocks (L, R) are provided to the respective functional blocks of the Feistel network; and
   the input data are distributed asymmetrically to the subblocks in dependence on the size of the input data.

2. The method according to claim 1 or 2, **characterized in that** the predetermined values of the subblocks (L, R) are zeros, and that masking is performed by a logical AND operation with a configuration register ($LReg_0$, $LReg_1$, $RReg_0$, $RReg_1$) that includes exactly the required number of ones.

## Revendications

1. Procédé de cryptage par blocs pour le cryptage de données à l'aide d'un réseau de Feistel, dans lequel les données d'entrée pour chaque passage sont divisées en deux blocs partiels (L, R) de même grandeur I,
   **caractérisé par le fait**
   **que** les données d'entrée ont une grandeur n qui est inférieure à la grandeur de bloc 2l fixée par les deux blocs partiels (L, R);
   **que** les données d'entrée sont divisées de sorte que le premier bloc partiel (L) comporte une première partie r des données d'entrée et le deuxième bloc partiel (R) comporte une deuxième partie s des données d'entrée, le reste des blocs partiels (L, R) étant occupé par des valeurs prédéterminées;
   **que** les données contenues dans les blocs partiels (L, R) sont sélectionnées de manière commandée par un masque de sorte que les parties r, s des données d'entrée se trouvant dans les blocs partiels respectifs (L, R) soient mises à disposition des blocs de fonction correspondants du réseau de Feistel; et
   **que** les données d'entrée sont réparties de manière asymétrique sur les blocs partiels en fonction de la grandeur des données d'entrée.

2. Procédé selon la revendication 1 ou 2, **caractérisé par le fait que** les valeurs prédéterminées des blocs partiels (L, R) sont des zéros, et que le masquage a lieu par couplage ET logique avec un registre de configuration ($LReg_0$, $LReg_1$ $RReg_0$, $RREG_1$) qui contient exactement le nombre requis de uns.

# FIG 1

# FIG 3

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0801477 A1

**In der Beschreibung aufgeführte Nicht-Patentliteratur**

- On the construction of variable-input-length ciphers. **BELLARE M et al.** FAST SOFTWARE ENCRYPTION. 6TH INTERNATIONAL WORKSHOP, FSE'99. PROCEEDINGS, FAST SOFTWARE ENCRYPTION. 6TH INTERNATIONAL WORKSHOP, FSE'99. Springer-Verlag, 24. Marz 1999, 231-244

- **B. Schneier.** Applied Cryptography. Verlag John Wiley & Sons, 1996, 121-144
- Unbalanced Feistel networks and block cipher design. **B. Schneier ; J. Kelsey.** Proceedings of the third International Workshop on Fast Software Encyryption. Springer-Verlag, 1996, 121-144